# EUROPÄISCHE PATENTANMELDUNG

(11) **EP 1 707 877 A1**
(43) Veröffentlichungstag der Anmeldung: **04.10.2006**
(21) Anmeldenummer: 05005922.9
(22) Anmeldetag: 18.03.2005
(51) Int. Cl.: F23J 15/04, B01D 53/00

(54) **Rauchgasreinigungsvorrichtung mit geteiltem Waschflüssigkeitssumpf**

(71) Anmelder: Lurgi Lentjes AG, 40549 Düsseldorf (DE)
(72) Erfinder: Risse, Theo, 59368 Werne (DE); Moser, Christian, 45359 Essen (DE)
(74) Vertreter: Stenger, Watzke & Ring

(57) **Zusammenfassung**

Die vorliegende Erfindung betrifft eine Vorrichtung zur Reinigung von Rauchgas mit einem in mehrere Becken (20,22) unterteilten Waschflüssigkeitssumpf (16) und einer Pumpeinrichtung (26), die die Waschflüssigkeit aus wenigstens einem Becken (22) des Waschflüssigkeitssumpfes (16) zu Waschflüssigkeitsdüsen (14) pumpt.

## Beschreibung

Die vorliegende Erfindung betrifft eine Vorrichtung und ein Verfahren zur Reinigung von Rauchgas, insbesondere zur Entschwefelung von Abgas eines Kohlekraftwerks oder dergleichen.

Vorrichtungen zur Reinigung sind bereits bekannt. Sie umfassen normalerweise einen Waschturm mit Waschflüssigkeitsdüsen, die häufig in mehreren Ebenen angeordnet sind, einen Waschflüssigkeitssumpf, in dem Waschflüssigkeit gesammelt wird, und einen Absorptionsbereich, der sich in einem zylindrischen Behälterabschnitt des Waschturms vom Waschflüssigkeitssumpf bis zur oberen Waschflüssigkeitsdüsenebene erstreckt. Rauchgas wird in einen unteren Abschnitt des Absorptionsbereiches in den Waschturm eingeleitet, strömt von dort aufwärts und verläßt den Waschturm durch eine oberhalb der Waschflüssigkeitsdüsen vorgesehene Austrittsöffnung. Auf seinem Weg durch den Waschturm kommt das Rauchgas mit aus den Waschflüssigkeitsdüsen austretender Waschflüssigkeit in Kontakt und wird entschwefelt, was nachfolgend näher beschrieben ist. Eine derartige Reinigungsvorrichtung ist beispielsweise aus der DE-A-100 58 548 bekannt.

Die Waschflüssigkeit umfaßt neben Wasser vorzugsweise Erdalkalien, die mit den im Rauchgas vorhandenen Schwefeloxiden und mit dem im Waschturm erzeugten Schwefeloxiden reagieren. Es wird insbesondere Kalk in Form von Kalziumoxid, Kalziumhydroxid, Kalziumkarbonat oder dergleichen verwendet.

Die Erdalkalien reagieren mit den in dem Rauchgas vorhandenen Schwefeloxiden im wesentlichen zu Kalziumsulfit, das in der Waschflüssigkeit gebunden wird. Das Rauchgas wird auf diese Weise von den unerwünschten Schwefeloxiden gereinigt und tritt anschließend aus der Reinigungsvorrichtung aus. Die Waschflüssigkeit hingegen gelangt zusammen mit den in dieser schwebend gehaltenen Kalziumsulfitteilchen in den Waschflüssigkeitssumpf und wird dort gesammelt.

Kalziumsulfat, das bei der Rauchgasreinigung gebildet wird, weist ähnlich vorteilhafte Eigenschaften wie Naturgips auf. Somit handelt es sich hierbei um ein erwünschtes Nebenprodukt des Rauchgasreinigungsverfahrens, das aus der im Waschflüssigkeitssumpf gesammelten Waschflüssigkeit gewonnen wird. Die Kalziumsulfatteilchen werden zusammen mit der Waschflüssigkeit dem Waschflüssigkeitssumpf entnommen und dieser in einem sich anschließenden Verfahren entzogen. Das Kalziumsulfat kann dann zu verschiedenen Werkstoffen weiterverarbeitet werden, insbesondere zu Bauwerkstoffen.

Bei der Gewinnung von Kalziumsulfat guter Qualität ist darauf zu achten, daß möglichst wenig Erdalkalien in der im Waschflüssigkeitssumpf vorhandenen Waschflüssigkeit enthalten sind, wenn die Waschflüssigkeit zur Gewinnung von Kalziumsulfat dem Waschflüssigkeitssumpf entnommen wird.

Entsprechend sollten nahezu alle der Waschflüssigkeit beigemischten Erdalkalien während des Rauchgasreinigungsprozesses mit den im zu reinigenden Rauchgas vorhandenen Schwefeloxiden reagieren.

Eine derart vollständige Reaktion der Erdalkalien kann durch verschiedene Maßnahmen angenähert werden, die auch gemeinsam durchgeführt werden können.

Zum einen kann eine Verbesserung der Reaktion zwischen den Reaktionspartnern angestrebt werden, um die Wahrscheinlichkeit einer entsprechenden Reaktion zu erhöhen.

Die Reaktion von Erdalkalien und Schwefeloxiden zu Kalziumsulfit erfolgt durch Diffusion und/oder Lösung an der Kontaktfläche zwischen Waschflüssigkeit und Rauchgas. Je größer demnach die Kontaktfläche ist, desto besser wird die erzielte Reaktion sein. Die Kontaktfläche ist umgekehrt proportional zur Größe bzw. zum Durchmesser der die Waschflüssigkeitsdüsen verlassenden Waschflüssigkeitstropfen. Entsprechend wird beispielsweise in der CA-A-1 251 919 vorgeschlagen, die Waschflüssigkeit mittels der Waschflüssigkeitsdüsen möglichst fein zu zerstäuben, um auf diese Weise die Größe der Waschflüssigkeitstropfen zu verringern und entsprechend die Gesamtkontaktfläche zwischen Waschflüssigkeit und zu reinigendem Rauchgas zu vergrößern.

Eine nahezu vollständige Reaktion der Erdalkalien während des Rauchgasreinigungsprozesses kann zum anderen auch dadurch angenähert werden, daß die Verweildauer der Waschflüssigkeit in dem Absorptionsbereich des Waschturms verlängert wird, um den Erdalkalien somit ausreichend Gelegenheit zu geben, mit Schwefeloxiden im Rauchgas zu reagieren. Auf diese Weise wird die Wahrscheinlichkeit erhöht, daß jedes Erdalkalienteilchen an einer solchen Reaktion teilnimmt. Zur Erhöhung der Verweildauer der Waschflüssigkeit in dem Absorptionsbereich des Waschturms schlägt beispielsweise die CA-A-1 251 919 vor, die Waschflüssigkeit mehrmals zwischen Waschflüssigkeitssumpf und Waschflüssigkeitsdüsen zirkulieren zu lassen, so daß diese häufiger den Absorptionsbereich des Waschturms passiert.

Ein weiteres Problem bei der Gewinnung von Kalziumsulfat hoher Qualität besteht schließlich darin, daß bei der Reaktion der Waschflüssigkeit mit dem Rauchgas nicht nur Kalziumsulfat, sondern auch unerwünschte Nebenprodukte wie beispielsweise Sulfite, insbesondere Kalziumsulfit und Kalziumsulfit, entstehen, die das Kalziumsulfat verunreinigen.

Um den Anteil dieser unerwünschten Sulfite in der in dem Waschflüssigkeitssumpf vorhandenen Waschflüssigkeit zu verringern, wird in der US-A-4 539 184 vorgeschlagen, in zumindest einem Bereich des Waschflüssigkeitssumpfes Sauerstoff in Form von Luft oder dergleichen einzubringen, um dort vorhandene Kalziumsulfite zu Kalziumsulfat zu oxidieren.

Es ist eine Aufgabe der vorliegenden Erfindung, eine Vorrichtung und ein Verfahren zur Reinigung von Rauchgas, insbesondere von Rauchgas aus einem Kohlekraftwerk oder dergleichen, zu schaffen, bei der bzw. bei dem die Reaktion zwischen den in der Waschflüssigkeit gelösten Erdalkalien und den im Rauchgas vorhandenen Schwefeloxiden weiter optimiert ist.

Die oben genannte Aufgabe wird gemäß der vorliegende Erfindung durch eine Vorrichtung nach Anspruch 1 und ein Verfahren nach Anspruch 8 gelöst.

Die erfindungsgemäße Vorrichtung zur Reinigung von Rauchgas umfaßt einen in mehrere Becken unterteilten Waschflüssigkeitssumpf. In wenigstens einem Becken wird die den Absorptionsbereich verlassende Waschflüssigkeit aufgefangen. Dort kann sie dann zumindest teilweise zur Kalziumsulfatgewinnung entnommen werden. In wenigstens einem weiteren Becken wird das frische Additiv, beispielsweise Kalkstein, zugegeben.

Die Aufteilung des Waschflüssigkeitssumpfes in zumindest zwei Becken hat den Vorteil, daß die Additivzugabe und die für die Kalziumsulfatgewinnung erforderliche Waschflüssigkeitentnahme örtlich trennbar sind. Die Additivzugabe ist zwar erforderlich, um der Waschflüssigkeit die für die Reinigung erforderlichen Reaktionspartner in Form von Erdalkalien zur Verfügung zu stellen, andererseits soll eine zu hohe Additivkonzentration jedoch vermieden werden, da diejenigen Additive, die nicht an einer Reaktion im Absorptionsbereich teilnehmen, die für die Kalziumsulfatgewinnung verwendete Waschflüssigkeit im Waschflüssigkeitssumpf verunreinigen.

Die für den Reinigungsprozeß erforderliche Waschflüssigkeit wird zur Vorreinigung des Rauchgases aus dem Becken mit geringerer Additivkonzentration genommen und zur endgültigen Reinigung aus dem Becken, in dem die Zugabe der Additive erfolgt. Eine hohe Additivkonzentration führt bei dem gezielten Einsatz zur optimierten Reinigungsleistung. Die Entnahme der Waschflüssigkeit für die Kalziumsulfatgewinnung erfolgt aus dem Becken mit geringerer Additivkonzentration, so daß Kalziumsulfat mit einer besseren Qualität erzeugt werden kann.

Zur Unterteilung des Waschflüssigkeitssumpfes in mehrere Becken ist vorzugsweise zumindest eine Trennwand vorgesehen. Die Trennwand umfaßt vorzugsweise Mittel zum Niveauausgleich im Waschflüssigkeitssumpf, beispielsweise Durchgangsöffnungen, die einen Austausch von Waschflüssigkeit zwischen den Becken in geringem Maße zulassen.

Gemäß einer bevorzugten Ausgestaltung der vorliegenden Erfindung umfaßt diese eine Waschflüssigkeitsanalyseeinrichtung, die bevorzugt kontinuierlich Waschflüssigkeitsproben analysiert. Mit Hilfe dieser Waschflüssigkeitsanalyseeinrichtung kann eine Analyse der Waschflüssigkeitszusammensetzung, des pH-Wertes der Waschflüssigkeit oder dergleichen erfolgen. Entsprechend kann sichergestellt werden, daß die in den Absorptionsbereich geleitete Waschflüssigkeit und die zur Kalziumsulfatgewinnung entnommene Waschflüssigkeit stets die optimale Zusammensetzung, den gewünschten pH-Wert oder dergleichen aufweisen.

Ferner ist es gemäß einer weiteren Ausgestaltung der vorliegenden Erfindung vorteilhaft, daß zumindest eine Seite des Behälters derart ausgebildet ist, daß das Volumen des Absorptionsbereiches von einem Rauchgaseinlaß zu einem Rauchgasauslaß zunimmt oder abnimmt, so daß das den Absorptionsbereich durchströmende Rauchgas entsprechend abgebremst oder beschleunigt wird, was wiederum entsprechende Auswirkungen auf die Verweilzeit des Rauchgases im Absorptionsbereich hat. Bei der zumindest einen Behälterseite kann es sich beispielsweise um die Oberseite, um eine oder mehrere Seitenwände oder um eine entsprechende Kombination handeln.

Bei dem erfindungsgemäßen Verfahren weist die in den einzelnen Becken des Waschflüssigkeitssumpfes vorhandene Waschflüssigkeit zumindest während des Betriebs unterschiedliche Zusammensetzungen auf. Während des Betriebs wird Waschflüssigkeit aus dem ersten Becken auf der Seite des Gaseinlasses zu Waschflüssigkeitsdüsen auf der Seite des Gaseinlasses und Waschflüssigkeit mit dem zweiten Becken auf der Seite des Gasauslasses zu Waschflüssigkeitsdüsen auf der Seite des Gasauslasses gepumpt. Die Waschflüssigkeit aus dem ersten Becken wird also zur Vorreinigung und die Waschflüssigkeit aus dem zweiten Becken zur Nachreinigung des Rauchgases verwendet. Mit der Zeit stellt sich ein natürliches Additivkonzentrationsgefälle in der Waschflüssigkeit vom ersten zum zweiten Becken ein. Die Additivkonzentration der Waschflüssigkeit im Waschflüssigkeitssumpf nimmt also in Richtung des zweiten Beckens zu, wo sie maximal ist.

Schließlich wird die Waschflüssigkeit zur Gewinnung von Kalziumsulfat gemäß einer bevorzugten Verfahrensausgestaltung nur einem Becken des Waschflüssigkeitssumpfes entnommen, und zwar vorzugsweise demjenigen Becken, in dem die Waschflüssigkeit mit der geringsten Additivkonzentration vorhanden ist. Entsprechend kann Kalziumsulfat mit guter Qualität gewonnen werden.

Nachfolgend wird die vorliegende Erfindung unter Bezugnahme auf die Zeichnung genauer beschrieben. Darin ist
- Fig. 1: eine perspektivische Ansicht einer ersten Ausgestaltung der erfindungsgemäßen Vorrichtung zur Rauchgasreinigung,
- Fig. 2: eine Seitenansicht der in Fig. 1 dargestellten ersten Ausgestaltung der erfindungsgemäßen Vorrichtung ,
- Fig. 3: eine perspektivische Ansicht einer zweiten Ausgestaltung der erfindungsgemäßen Vorrichtung zur Rauchgasreinigung,
- Fig. 4: eine perspektivische Ansicht einer weiteren Ausgestaltung der erfindungsgemäßen Vorrichtung zur Rauchgasreinigung,
- Fig. 5: eine perspektivische Ansicht einer vierten Ausgestaltung der erfindungsgemäßen Vorrichtung zur Rauchgasreinigung und
- Fig. 6: eine perspektivische Ansicht einer fünften Ausgestaltung der erfindungsgemäßen Vorrichtung zur Rauchgasreinigung.

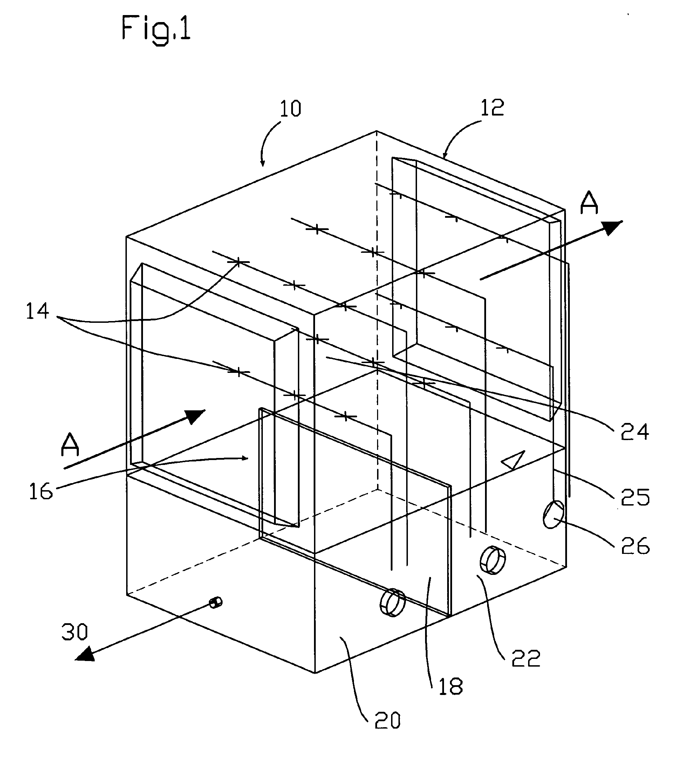

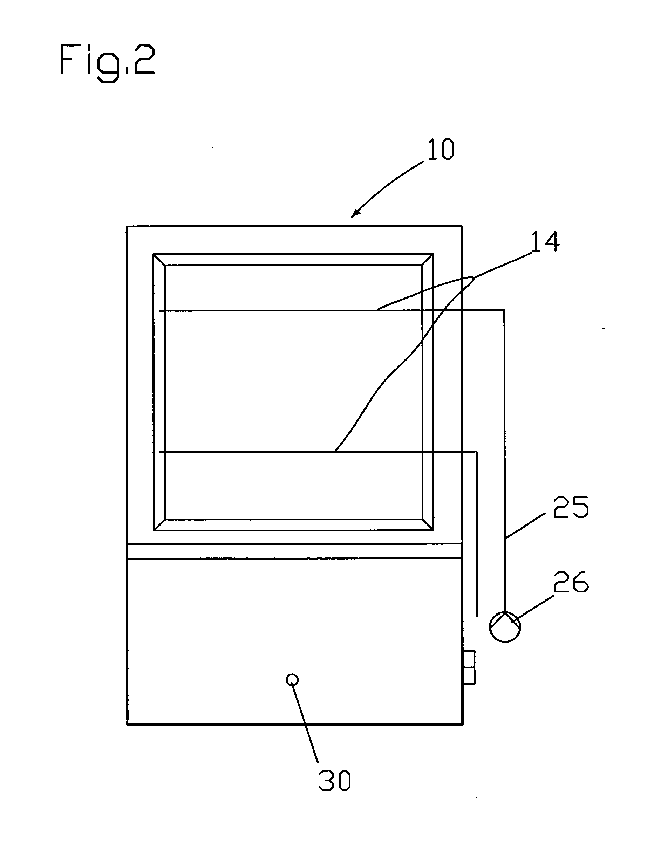

Fig. 1 zeigt eine perspektivische Ansicht einer ersten Ausgestaltung der erfindungsgemäßen Vorrichtung 10 zur Rauchgasreinigung, wobei die Wände der Vorrichtung 10 der besseren Darstellung halber "durchsichtig" dargestellt sind, so daß die innerhalb der Vorrichtung 10 angeordneten Bauteile sichtbar sind. Dieses gilt im übrigen auch für die in den Fign. 2 bis 6 dargestellten Vorrichtungen. Bei dem Rauchgas handelt es sich vorzugsweise um Rauchgas eines Kohlekraftwerks oder dergleichen. Die Vorrichtung 10 umfaßt einen Behälter 12, der vorzugsweise quaderförmig ausgebildet ist. In einem oberen Abschnitt des Behälters 12 sind Waschflüssigkeitsdüsen 14 angeordnet, die auf unterschiedlichen Niveaus arrangiert und in unterschiedlichen Richtungen ausgerichtet sein können, beispielsweise horizontal oder vertikal, wobei eine vertikale Ausrichtung der Waschflüssigkeitsdüsen 14 bevorzugt ist. Im unteren Abschnitt des Behälters 12 ist ein Waschflüssigkeitssumpf 16 zur Aufnahme von Waschflüssigkeit vorgesehen. Der Waschflüssigkeitssumpf 16 ist mit Hilfe einer Trennwand 18 in ein erstes Becken 20 und ein zweites Becken 22 unterteilt. Die Trennwand 18 steht dabei über den obersten Flüssigkeitspegel des Waschflüssigkeitssumpfes vor, so daß die beiden Becken 20 und 22 vollständig voneinander getrennt sind. In der Trennwand sind nicht dargestellte Öffnungen zum Niveauausgleich im Waschflüssigkeitssumpf vorgesehen, die einen Waschflüssigkeitsaustausch zwischen den Becken 20 und 22 in geringem Maße zulassen. Zwischen den Waschflüssigkeitsdüsen 14 und dem Waschflüssigkeitssumpf 16 umfaßt der Behälter 12 einen Absorptionsbereich 24, durch den im Betriebszustand der Vorrichtung 10 zu entschwefelndes Rauchgas horizontal in Richtung der Pfeile A von der Rauchgaseinlaßöffnung 17 zur Rauchgasauslaßöffnung 19 geleitet wird. Durch die Waschflüssigkeitsdüsen 14 wird in Form eines feinen Nebels Waschflüssigkeit auf das den Absorptionsbereich 24 durchströmende Rauchgas gesprüht. Die in der Waschflüssigkeit enthaltenen Erdalkalien, wie beispielsweise Kalziumkarbonat, reagieren mit den Schwefeloxyden im Rauchgas, wodurch im wesentlichen Kalziumsulfit gebildet wird, das wiederum in der Waschflüssigkeit gebunden ist. Auf diese Weise wird das durch den Absorptionsbereich 24 strömende Rauchgas entschwefelt.

Die den Absorptionsbereich 24 verlassende Waschflüssigkeit, die die Kalziumsulfate enthält, sammelt sich im Waschflüssigkeitssumpf 16, und zwar sowohl im ersten Becken 20 als auch im zweiten Becken 22. In Becken 20 und/oder 22 wird die jeweils dort enthaltene Waschflüssigkeit mit Hilfe einer nicht dargestellten Waschflüssigkeitsanalyseeinrichtung analysiert, also die Waschflüssigkeitszusammensetzung und/oder der pH-Wert der Waschflüssigkeit festgestellt.

Stimmen die mit Hilfe der nicht dargestellten Analyseeinrichtung ermittelten Parameter der in dem ersten Becken 20 enthaltenen Waschflüssigkeit mit gewünschten Waschflüssigkeitsparametern für die Kalziumsulfatgewinnung überein, so wird dem ersten Becken 20 über eine entsprechende Leitung 30 Waschflüssigkeit entnommen. Die Leitung 30, auch wenn nicht dargestellt, umfaßt die zur Entnahme von Waschflüssigkeit erforderlichen Einrichtungen, wie beispielsweise Ventile, Pumpen oder dergleichen.

Im zweiten Becken 22 werden schubweise oder kontinuierlich Additive in Form von Erdalkalien zugeführt, um in der Waschflüssigkeit diejenigen Erdalkalien, die im Absorptionsbereich 24 mit den im Rauchgas vorhandenen Schwefeloxyden reagieren, zu ersetzen. Auf diese Weise verfügt die Waschflüssigkeit stets über die für den Reinigungsprozeß erforderlichen Additive. Die Zufuhr von Erdalkalien kann ebenfalls basierend auf den zuvor genannten Analyseergebnissen erfolgen.

In den Becken 20 und 22, insbesondere aber im Becken 20, ist vorzugsweise eine Oxidationseinrichtung vorgesehen, um die in dem Flüssigkeitssumpf 16 vorhandenen unerwünschten Kalziumsulfite zu Kalziumsulfat zu oxidieren. Diese Oxidationseinrichtung, die vorliegend nicht dargestellt ist, kann beispielsweise durch eine Sauerstoffzufuhr in Form von Luft erfolgen, wobei die Luft bevorzugt durch waagerecht in dem Becken 20 und/oder 22 vorgesehene Leitungen mit entsprechenden Luftauslaßöffnungen zugeführt wird.

Pumpen 26 pumpen die im Waschflüssigkeitssumpf 16 gesammelte Waschflüssigkeit schließlich zurück zu den Waschflüssigkeitsdüsen 14. Dabei wird die dem ersten Becken 20 entnommene Waschflüssigkeit den Düsen 14 nahe des Gaseinlasses zur Vorreinigung des Rauchgases und die dem zweiten Becken 22 entnommene Waschflüssigkeit den Düsen 14 nahe des Gasaustrittes zur endgültigen Reinigung des Rauchgases zugeführt. Entsprechend stellt sich im Waschflüssigkeitssumpf 16 ein Additivkonzentrationsgefälle in der Waschflüssigkeit ein, nämlich von einer geringen Konzentration im ersten Becken 20 zu einer maximalen Konzentration im zweiten Becken 22. Auf diese Weise kann dem Becken 20 stets Waschflüssigkeit mit einer sehr geringen Additivkonzentration zur Gewinnung von Kalziumsulfat entnommen werden.

Fig. 2 ist eine perspektivische Ansicht der in Fig. 1 dargestellten Vorrichtung 10. Anhand Fig. 2 ist gut zu erkennen, daß die Waschflüssigkeitsdüsen 14 in mehreren Ebenen angeordnet sind.

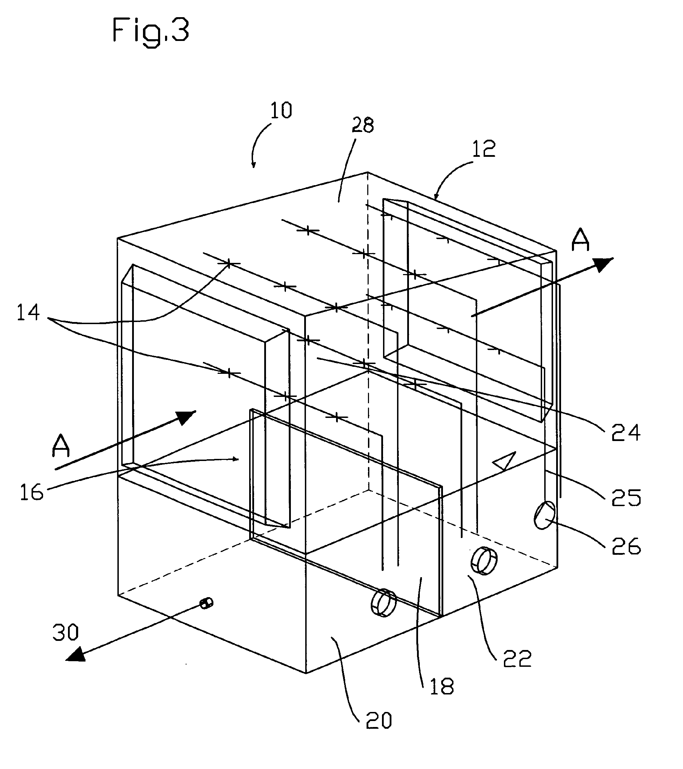

Fig. 3 ist eine perspektivische Ansicht einer zweiten Ausgestaltung der erfindungsgemäßen Vorrichtung zur Rauchgasreinigung. Die in Fig. 3 dargestellte Vorrichtung 10 unterscheidet sich im wesentlichen dahingehend von der in den Fign. 1 und 2 dargestellten Vorrichtung 10, daß die Oberseite 28 derart angewinkelt ist, daß das Volumen des Absorptionsbereiches 24 von der Rauchgaseinlaßöffnung 17 zur Rauchgasauslaßöffnung 19 kleiner wird. Bei dieser beispielhaften Ausgestaltung ist auch die Rauchgaseinlaßöffnung 17 größer als die Rauchgasauslaßöffnung 19. Durch diese Ausbildung des Behälters 12 sowie der Rauchgaseinlaß- und Rauchgasauslaßöffnung 17 und 19 wird das durch den Absorptionsbereich 24 strömende Rauchgas im Behälter 12 beschleunigt, so daß die Geschwindigkeit des Rauchgases zunimmt und somit die Verweildauer in dem Behälter 12 und somit im Absorptionsbereich 24 verkürzt wird.

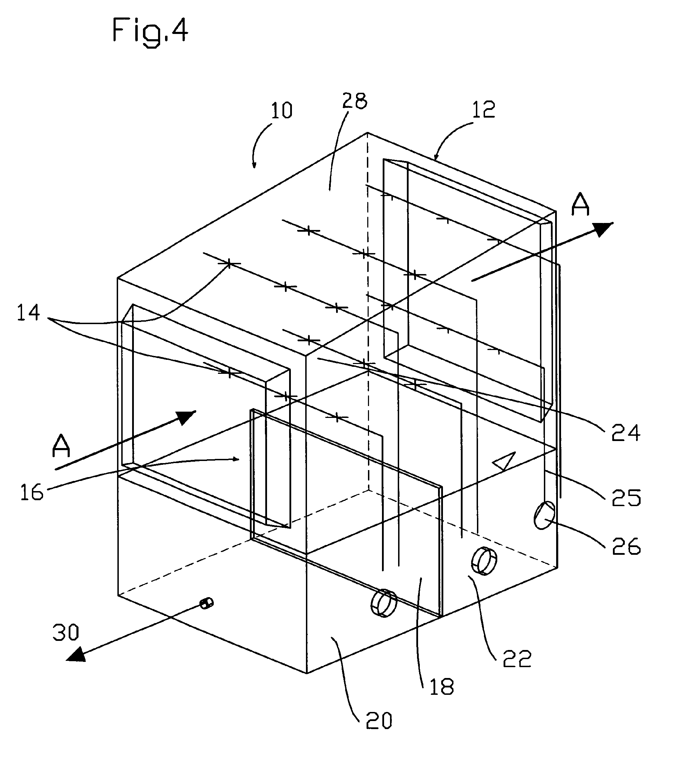

Fig. 4 zeigt noch eine weitere Ausgestaltung der Vorrichtung zur Rauchgasreinigung gemäß der vorliegenden Erfindung. Im Gegensatz zu der in Fig. 3 dargestellten Vorrichtung ist die Oberseite 28 des Behälters 12 derart abgewinkelt, daß das Volumen des Absorptionsbereiches 24 von der Rauchgaseinlaßöffnung 17 zur Rauchgasauslaßöffnung 19 zunimmt, wobei hier die Rauchgaseinlaßöffnung 17 entsprechend kleiner als die Rauchgasauslaßöffnung 19 ausgebildet ist. Auf diese Weise wird das Rauchgas auf seinem Weg durch den Absorptionsbereich 24 des Behälters 12 von Rauchgaseinlaßöffnung 17 zur Rauchgasauslaßöffnung 19 entspannt, so daß seine Geschwindigkeit abnimmt und somit seine Verweildauer im Absorptionsbereich 24 verlängert wird.

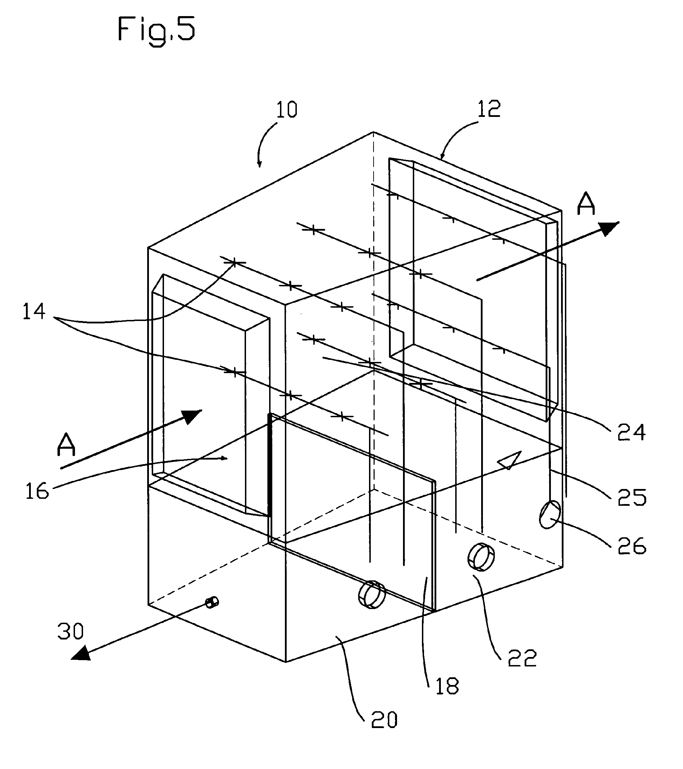

Fig. 5 ist eine perspektivische Ansicht einer vierten Ausgestaltung der erfindungsgemäßen Vorrichtung zur Rauchgasreinigung, die im wesentlichen der in Fig. 4 dargestellten Ausgestaltung entspricht. Gemäß Fig. 5 sind jedoch anstelle der Oberseite 28 des Behälters 12 die Seitenwände des Behälters 12 derart abgewinkelt, daß das Volumen des Absorptionsbereiches 24 von der Rauchgaseinlaßöffnung 17 zur Rauchgasauslaßöffnung 19 zunimmt.

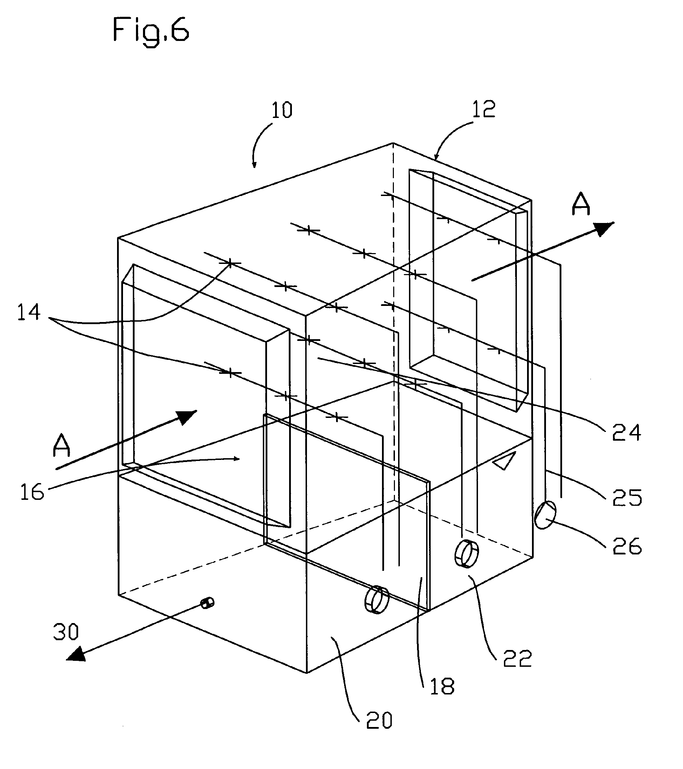

Fig. 6 ist schließlich eine perspektivische Ansicht einer fünften Ausgestaltung der erfindungsgemäßen Vorrichtung zur Rauchgasreinigung, die im wesentlichen der in Fig. 3 dargestellten Ausgestaltung ähnelt, wobei hier nicht die Oberseite 28 des Behälters 12 sondern die Seitenwände des Behälters derart abgewinkelt sind, daß das Volumen des Absorptionsbereiches 24 von der Rauchgaseinlaßöffnung 17 zur Rauchgasauslaßöffnung 19 kleiner wird.

Die in den Figuren 1 bis 6 dargestellten Ausgestaltungen der erfindungsgemäßen Vorrichtung umfassen jeweils eine Oxidationseinrichtung im Waschflüssigkeitssumpf, die in den Figuren der Einfachheit halber nicht dargestellt ist. Mittels dieser Oxidationseinrichtung wird Sauerstoff in den Waschflüssigkeitssumpf eingeleitet, der mit Kalziumsulfiten zu Kalziumsulfat reagiert.

Es sollte klar sein, daß die zuvor beschriebene bevorzugte Ausführungsform nicht einschränkend ist, also weitere Modifikationen und Änderungen möglich sind, ohne den durch die beiliegenden Ansprüche definierten Schutzbereich zu verlassen.

Beispielsweise muß durch die Trennwand 18 keine vollständige Trennung der beiden Becken 20 und 22 erfolgen, so daß in gewissem Maße ein Waschflüssigkeitsaustausch zwischen den beiden Becken möglich ist.

Ferner kann auch nur in einem der beiden Becken 20 oder 22 eine Waschflüssigkeitsanalyseeinrichtung und/oder eine Oxidationseinrichtung vorgesehen sein.

Zudem kann die Vorrichtung 10 auch von unten nach oben durchströmt werden, d. h. das Rauchgas tritt beispielsweise links in einem unteren Abschnitt des Absorptionsbereiches 24 in den Behälter 12 ein und verläßt diesen rechts oberhalb der Waschflüssigkeitsdüsen 14 durch eine entsprechende Öffnung. Es sei jedoch darauf hingewiesen, daß eine horizontale Durchströmung eines Behälters 12 durch das Rauchgas, wie in Fig. 1 dargestellt, bevorzugt ist.

Auch kann der Waschflüssigkeitssumpf auch mehr als zwei Becken aufweisen.

Schließlich können die erfindungsgemäße Vorrichtung und das erfindungsgemäße Verfahren auch beispielsweise zur Meerwasserentsalzung, in der Zementindustrie oder allgemein in fossile Brennstoffe verwertenden Kraftwerken eingesetzt werden.

### Bezugszeichenliste:

- 10: Vorrichtung
- 12: Behälter
- 14: Waschflüssigkeitsdüsen
- 16: Waschflüssigkeitssumpf
- 17: Rauchgaseinlaßöffnung
- 18: Trennwand
- 19: Rauchgasauslaßöffnung
- 20: erstes Becken
- 22: zweites Becken
- 24: Absorptionsbereich
- 25: Leitung
- 26: Pumpeinrichtung
- 28: Oberseite
- 30: Leitung

## Patentansprüche

1. Vorrichtung zur Reinigung von Rauchgas mit einem in mehrere Becken (20, 22) unterteilten Waschflüssigkeitssumpf (16) und einer Pumpeinrichtung (26), die Waschflüssigkeit aus wenigstens einem Becken (22) des Waschflüssigkeitssumpfes (16) zu Waschflüssigkeitsdüsen (14) pumpt.

2. Vorrichtung nach Anspruch 1, wobei zur Unterteilung des Waschflüssigkeitssumpfes (16) wenigstens eine Trennwand (18) vorgesehen ist.

3. Vorrichtung nach Anspruch 2, wobei eine Trennwand (18) Mittel zum Niveauausgleich im Waschflüssigkeitssumpf (16) aufweist, die in geringem Maße einen Flüssigkeitsaustausch zwischen den Becken (20, 22) zuläßt.

4. Vorrichtung nach Anspruch 2 oder 3, wobei die aus einzelnen Becken (20, 22) zu pumpende Waschflüssigkeitsmenge einstellbar ist.

5. Vorrichtung nach einem der vorhergehenden Ansprüche, die eine Waschflüssigkeitsanalyseeinrichtung umfaßt.

6. Vorrichtung nach Anspruch 5, wobei die Waschflüssigkeitsanalyseeinrichtung kontinuierlich Waschflüssigkeitsproben analysiert.

7. Vorrichtung nach einem der vorhergehenden Ansprüche, wobei zumindest eine Seite des Behälters (12) derart ausgebildet ist, daß das Volumen des Absorptionsbereiches (24) von einem Rauchgaseinlaß (17) zu einem Rauchgasauslaß (19) zunimmt oder abnimmt.

8. Verfahren zur Rauchgasreinigung unter Verwendung einer Vorrichtung nach einem der vorhergehenden Ansprüche, bei dem die in den einzelnen Becken (20, 22) des Waschflüssigkeitssumpfes (16) vorhandenen Waschflüssigkeiten zumindest während des Betriebs unterschiedliche Zusammensetzungen aufweisen.

9. Verfahren nach Anspruch 8, bei dem Waschflüssigkeit aus zumindest einem Becken (22) des Waschflüssigkeitssumpfes (16) zu Waschflüssigkeitsdüsen (14) gepumpt wird.

10. Verfahren nach Anspruch 9, bei dem aus verschiedenen Becken (20, 22) des Waschflüssigkeitssumpfes (16) gepumpte Waschflüssigkeitsmengen mit verschiedenen Zusammensetzungen zu unterschiedlichen Waschflüssigkeitsdüsen (14) geleitet werden.

11. Verfahren nach einem der Ansprüche 8 bis 10, bei dem die Waschflüssigkeit zumindest eines Beckens (20, 22) des Waschflüssigkeitssumpfes analysiert wird.

12. Verfahren nach Anspruch 11, bei dem die Waschflüssigkeitsanalyse im wesentlichen kontinuierlich erfolgt.

13. Verfahren nach einem der Ansprüche 8 bis 12, bei dem Waschflüssigkeit zwecks Gewinnung von Kalziumsulfat nur einem Becken (20) des Waschflüssigkeitssumpfes (16) entnommen wird.

14. Verfahren nach einem der Ansprüche 8 bis 13, bei dem das durch den Absorptionsbereich (24) des Behälters (12) geleitete Rauchgas beschleunigt oder abgebremst wird.
